# EUROPÄISCHE PATENTANMELDUNG

(11) **EP 3 542 875 A1**
(43) Veröffentlichungstag der Anmeldung: **25.09.2019**
(21) Anmeldenummer: 18162484.2
(22) Anmeldetag: 19.03.2018
(51) Int. Cl.: A63B 69/00, A63B 43/00, C09J 175/04

(54) **HAFTMITTELSYSTEM ZUR ERHÖHUNG DER HAFTBARKEIT ZWISCHEN EINEM GERÄT UND DER HAUT EINES BENUTZERS**

(71) Anmelder: Nolax AG, 6203 Sempach Station (CH)
(72) Erfinder: Bechter, Andreas, 4665 Oftringen (CH); Hosotte, Claude, 68220 Michelbach le Haut (FR); Engel, Robertino, 5034 Suhr (CH); Müller, Silvana, 6205 Sempach (CH)
(74) Vertreter: Hepp Wenger Ryffel AG

(57) **Zusammenfassung**

Die Erfindung betrifft ein Haftmittelsystem zur Erhöhung der Haftbarkeit zwischen einem Gerät und der Haut eines Benutzers. Das Haftmittelsystem weist eine erste Beschichtungskomponente zum Auftragen auf das Gerät und eine zweite Beschichtungskomponente zum Auftragen auf die Haut auf. Die erste und die zweite Beschichtungskomponente jede für sich weisen eine relativ geringe Oberflächenklebrigkeit auf. Bei Kontakt der ersten Beschichtungskomponente mit der zweiten Beschichtungskomponente ist jedoch eine relativ hohe Haftung erzielbar. Die Erfindung betrifft auch ein Verfahren zur Erzeugung eines Hafteffekts, ein Kit und Verwendung eines Haftmittelsystems.

## Beschreibung

Die Erfindung betrifft ein Haftmittelsystem zur Erhöhung der Haftbarkeit zwischen einem Gerät und der Haut eines Benutzers, ein Verfahren zur Erzeugung eines Hafteffekts, ein Kit für ein Haftmittelsystem sowie die Verwendung eines Haftmittelsystems, einer ersten Beschichtungskomponente und einer zweiten Beschichtungskomponente.

Die Verwendung von Harzen zur Erhöhung der Haftbarkeit zwischen einem Gerät und der Handfläche eines Benutzers sind beispielsweise aus dem Handballsport bekannt. Am häufigsten wird im Handball Naturharz verwendet, der die Griffigkeit des Balls erhöhen soll und somit eine bessere Ballkontrolle ermöglicht. Es kann - je nach Region - aber auch Kunstharz eingesetzt werden. Naturharz zeichnet sich durch eine besonders hohe Klebrigkeit aus. Naturharz lässt sich jedoch nur schwer von der Haut und von der Kleidung entfernen, was den Einsatz von speziellen Reinigungsmitteln erforderlich macht. Der Kontakt des Balls mit dem Hallenboden führt ebenfalls zu einer Übertragung des Harzes auf den Hallenboden, der im Anschluss aufwendig und kostenintensiv gereinigt werden muss. Kunstharz lässt sich zwar relativ leicht mit milden Reinigungsmitteln entfernen, der Hafteffekt ist jedoch deutlich geringer.

Als Alternative kann ein Gerät mit einem Acrylat, das PSA-Eigenschaften ("pressure-sensitive adhesive") besitzt, beschichtet werden. Dadurch wird anfänglich ein Hafteffekt zwischen dem Gerät und der Haut erzeugt. Dieser Hafteffekt lässt jedoch schnell nach, da sich auf der klebrigen Oberfläche auch Staub ansammelt.

Weitere Lösungsansätze umfassen die Veränderung des Oberflächenmaterials eines Sportgeräts wie beispielsweise in US 2016/0310802 Al beschrieben. Veränderte Oberflächen können sich jedoch mit der Zeit abnutzen und im ungünstigsten Fall gegen Wettkampfregeln verstossen.

Auch das Anbringen von Klebepads mit einer rutschfesten äusseren Oberfläche auf Teile der Hand ist aus dem Stand der Technik bekannt und beispielsweise in GB 2 382 762 A oder in EP 3 260 510 A1 beschrieben. Solche Pads haben jedoch den Nachteil, dass diese sich während des Spiels lösen können. Das Abziehen der Klebepads ist schmerzhaft und kann zu Hautreizungen führen. Zudem kann der Einsatz solcher Pads gegen Wettkampfregeln verstossen.

Es ist daher eine Aufgabe der Erfindung, die Nachteile des Stands der Technik zu überwinden.

Insbesondere ist es eine Aufgabe der Erfindung ein Haftmittelsystem bereitzustellen, dass eine sehr gute Haftung zwischen einem Gerät und der Haut eines Benutzers ermöglicht ohne jedoch klebrige Rückstände zu hinterlassen. Es ist eine weitere Aufgabe der Erfindung ein hautfreundliches Haftmittelsystem bereitzustellen.

Diese Aufgaben werden durch die in den unabhängigen Patentansprüchen definierten Vorrichtungen, Verfahren und Verwendungen gelöst. Weitere Ausführungsbeispiele ergeben sich aus den abhängigen Patentansprüchen.

Die Erfindung betrifft ein Haftmittelsystem zur Erhöhung der Haftbarkeit zwischen einem Gerät, insbesondere einem Ball, und der Haut eines Benutzers. Das Haftmittelsystem umfasst eine erste Beschichtungskomponente, bevorzugt eine Gerätebeschichtungskomponente zum Auftragen auf zumindest einen Teil des Gerätes, und eine zweite Beschichtungskomponente, bevorzugt eine Hautbeschichtungskomponente zum Auftragen auf zumindest einen Teil der Haut des Benutzers, insbesondere einer Handflächeninnenseite oder einer Fingerspitze. Die erste Beschichtungskomponente und die zweite Beschichtungskomponente jede für sich weisen eine Oberflächenklebrigkeit > 40 cm gemäss Rolling Ball Test nach Norm ASTM D 3121-06 auf. Bei Kontakt der ersten Beschichtungskomponente mit der zweiten Beschichtungskomponente ist eine Haftung zwischen 5 und 12 N/25mm, bevorzugt zwischen 6 und 10 N/25mm, besonders bevorzugt zwischen 7 und 9 N/25mm, gemäss T-Peel Test erzielbar.

Ein solches Haftmittelsystem hat überraschend gezeigt, dass bei in Kontaktbringen der ersten Beschichtungskomponente mit der zweiten Beschichtungskomponente eine starke Haftung resultiert, so dass das Gerät ohne grossen Kraftaufwand an der Haut haften bleibt. Gleichzeitig findet jedoch im Wesentlichen kein Klebstoffübertrag von dem Gerät auf die Haut und umgekehrt statt. Da beide Beschichtungskomponenten für sich nicht klebrig sind, haften kaum Staub oder andere Fremdkörper an den Händen und den Geräten.

Es ist ein Vorteil des erfindungsgemässen Haftmittelsystems, dass genau die Stellen des Geräts und der Haut mit der jeweiligen Beschichtungskomponente versehen werden können, wo der Hafteffekt erwünscht ist. Damit kann einerseits Klebstoffmaterial eingespart werden, andererseits wird weder das Gerät noch die Haut unnötig beschwert.

Das Gerät kann beispielweise ein Handball sein. Aber auch andere Sportgeräte, beispielsweise ein Speer, ein Stabhochsprungstab, ein Staffelstab, ein Turnbarrenholmen, oder ein Tennisschläger sind denkbar. Auch Musikinstrumente, Werkzeuge, Gehhilfen oder Haushaltsgeräte sind denkbar.

Die erste Beschichtungskomponente kann eine Dispersion, vorzugsweise eine Polyurethan-Dispersion, sein. Da die Beständigkeit von Polyurethanen durch Zugabe von Vernetzern erhöht wird, kann der ersten Beschichtungskomponente auch ein Vernetzer, wie zum Beispiel ein Isocyanat, hinzugefügt werden.

Die erste Beschichtungskomponente kann weiter ein Benetzungsmittel umfassen, welches für eine ausreichende Benetzung auf beispielsweise Handballkunstleder sorgt. Wasser kann der Dispersion beigefügt sein, um die Viskosität zu verringern, so dass die Beschichtungskomponente gleichmässig auf das Gerät aufgetragen werden kann.

Als Alternativen zu einer Polyurethan-Dispersion sind andere Verbindungen mit Kaltsiegel-Eigenschaften, beispielsweise, aber nicht ausschliesslich, Polyisopren, Polyethylenvinylacetat oder Polychloropren, denkbar.

Eine solche Beschichtung sorgt für eine mit handelsüblichem Handballharz vergleichbare Haftung zwischen der ersten Beschichtungskomponente und der zweiten Beschichtungskomponente. Die Beschichtung für sich ist griffig, aber nicht klebrig. Schmutz und Staub bleiben an einem mit der ersten Beschichtungskomponente beschichteten Gerät kaum haften. Gleichzeitig ist es mit nahezu allen Materialien kompatibel ohne diese anzugreifen. Im Wesentlichen erfolgt keine Übertragung der ersten Beschichtungskomponente an die Umgebung. Im Fall der Nutzung der ersten Beschichtungskomponente für die Beschichtung eines Handballs wird die Beschichtungskomponente somit im Wesentlichen nicht auf den Hallenboden übertragen

Die erste Beschichtungskomponente kann je nach Anwendung auch eine Acrylatdispersion, eine Polyisoprendispersion, eine Polyethylenvinylacetatdispersion, eine Polychloroprendispersion oder Mischungen davon umfassen. Diese Dispersionen können mit oder ohne herkömmliche Vernetzungssysteme vorliegen. Als Vernetzungssystem für Polyisoprendispersionen können beispielsweise schwefelhaltige Verbindungen dienen.

Grundsätzlich kann die erste Beschichtungskomponente durch das Hinzufügen von Additiven für die Haftung an der entsprechenden Oberfläche optimiert werden.

Die zweite Beschichtungskomponente kann eine Dispersion aus Polyurethan und mindestens ein Additiv umfassen. Das Additiv kann ausgewählt sein aus der Gruppe bestehend aus: Polyvinylpyrrolidon, Copolymeren davon oder modifiziertem Polyvinylpyrrolidon; Acrylat-Dispersionen; Dispersionen und Lösungen aus zuckerbasierten Rohstoffen, insbesondere Pektinen, Gummi Arabicum, CelluloseDerivaten oder Kautschuk; anderen Polyurethan-Dispersionen; Silan-Additiven; Silikon oder Mischungen davon. Polyvinylpyrrolidon sorgt beispielsweise dafür, dass die zweite Beschichtungskomponente auf der Haut haftet, die Polyurethan-Dispersion sorgt für die Haftung zwischen zweiter und erster Beschichtungskomponente. Alternativ oder zusätzlich zum Polyvinylpyrrolidon können die anderen vorhergehend genannten Additive eingesetzt werden.

Da die zweite Beschichtungskomponente zum Auftragen auf die Haut vorgesehen ist, müssen die Zusätze hautverträglich und toxikologisch unbedenklich sein.

Die erste und zweite Beschichtungskomponente sind vorzugsweise aufeinander abgestimmt, um eine optimale Haftbarkeit zwischen den Beschichtungskomponenten zu erzielen.

Wenigstens eine der Beschichtungskomponenten kann alkoholbasiert sein. Alkoholbasierte Beschichtungen verringern die Trocknungszeit gegenüber wasserbasierten Beschichtungen.

Ein weiterer Aspekt der Erfindung betrifft ein Verfahren zur Erzeugung eines Hafteffekts zwischen einem Gerät und der Haut des Benutzers mittels eines Haftmittelsystems, vorzugsweise eines Haftmittelsystems wie vorhergehend beschrieben. Das Verfahren umfasst die Schritte:
- Bereitstellen einer ersten Beschichtungskomponente,
- Auftragen der ersten Beschichtungskomponente auf zumindest einen Teil eines Gerätes, vorzugsweise einen Handball,
- Trocknen der ersten Beschichtungskomponente,
- Bereitstellen einer zweiten Beschichtungskomponente,
- Auftragen der zweiten Beschichtungskomponente auf zumindest einen Teil der Haut des Benutzers, vorzugsweise einer Handflächeninnenseite oder einer Fingerspitze,
- Trocknen der zweiten Beschichtungskomponente.
Beide Beschichtungskomponenten jede für sich weisen eine Oberflächenklebrigkeit > 40 cm gemäss Rolling Ball Test nach Norm ASTM D-3121 06 auf.
Das Verfahren umfasst weiter den folgenden Schritt:
- In Kontakt bringen des zumindest teilweise beschichteten Gerätes mit der zumindest teilweise beschichteten Haut.
Bei Kontakt der ersten Beschichtungskomponente mit der zweiten Beschichtungskomponente wird eine Haftung zwischen 5 und 12 N/25 mm, bevorzugt zwischen 6 und 10 N/25 mm und besonders bevorzugt zwischen 7 und 9 N/25 mm, gemäss T-Peel-Test, erzielt.

Auch während des Einsatzes der Beschichtungskomponenten, beispielsweise beim Tragen einer Beschichtungskomponente an einem Teil einer Handinnenfläche, ist die geringe Klebrigkeit von Vorteil: Übertragung von Beschichtungskomponenten auf Kleidung, andere Gegenstände oder eine Verunreinigung mit Staub erfolgt kaum. Eine Haftung wird erst erzielt, wenn die Beschichtungskomponenten zusammengebracht werden. Diese Haftung ermöglicht das sichere Halten und Handhaben eines Geräts. Dabei findet im Wesentlichen kein Übertrag der einen Beschichtungskomponente auf die andere statt.

Das Gerät kann wie vorhergehend beschrieben ein anderes Sportgerät, beispielsweise ein Speer, ein Stabhochsprungstab, ein Staffelstab, ein Turnbarrenholmen oder ein Rückschlagspielschläger sein. Es ist auch denkbar, dass das Gerät ein Musikinstrument, ein Werkzeug, eine Gehhilfe, ein Haushaltsgerät oder ein Alltagsgegenstand wie beispielsweise ein Mobiltelefon ist.

Die erste Beschichtungskomponente und die zweite Beschichtungskomponente sind vorzugsweise wie vorhergehend beschrieben ausgestaltet. Die Beschichtungskomponenten können mit einer Applikationshilfe oder von Hand aufgetragen werden. Als Applikationshilfen sind beispielsweise Spraydosen, Roll-on-Stifte, Schwamm-Applikator-Tube, Stempelkissen, Glue-Sticks oder Pinsel denkbar.
Die erste Beschichtungskomponente und die zweite Beschichtungskomponente können je nach Applikationsart und Verwendung flüssig, gelartig oder in Form einer Paste vorliegen.

Die Schichtdicke der frisch aufgetragenen, jeweils ersten und zweiten Beschichtungskomponente vor der Trocknung beträgt vorzugsweise zwischen 5 und 100 µm, vorzugsweise 35 und 70 µm, und ganz besonders bevorzugt 55 und 65 µm.

Die Trocknungszeit der ersten Beschichtungskomponente kann zwischen 25 und 35 min, vorzugsweise 30 min, betragen. Die Trocknungszeit der zweiten Beschichtungskomponente kann zwischen 2 und 15 min, vorzugsweise 5 und 10 min, betragen. Die Trocknungszeiten können durch Zusätze, Trocknungstechniken oder Beschichtungstechniken verkürzt werden.

Das Auftragen der ersten und/oder der zweiten Beschichtungskomponente kann wenigstens einmal wiederholt werden, um so einen andauernden Hafteffekt zu gewährleisten.

Ein weiterer Aspekt der Erfindung betrifft ein Kit für ein Haftmittel-System, insbesondere für ein Haftmittelsystem wie vorhergehend beschrieben, zur Erzeugung eines Hafteffekts zwischen einem Gerät und der Haut eines Benutzers. Das Kit umfasst eine erste Beschichtungskomponente zum Auftragen auf das Gerät und eine zweite Beschichtungskomponente zum Auftragen auf die Haut sowie Anwendungshinweise zur Verwendung der Beschichtungskomponenten, insbesondere in einem Verfahren wie vorhergehend beschrieben. Optional kann das Kit über eine Applikationshilfe für die erste und/oder zweite Beschichtungskomponente verfügen.

Die Beschichtungskomponenten und optionalen Applikationshilfen können wie vorhergehend beschrieben gestaltet sein.

Das Kit hat den Vorteil, dass es alle Komponenten des Haftmittelsystems umfasst, um ein optimales Haftungsergebnis zu erzielen. Als Kit können die einzelnen Komponenten gut zusammen gelagert und transportiert werden, so dass keine der Komponenten vergessen oder verloren gehen.

Das Kit kann zusätzlich eine Reinigungslotion umfassen. Eine solche Reinigungslotion ermöglicht eine einfache Entfernung der Beschichtungskomponenten von der Haut des Benutzers respektive vom Gerät. Idealerweise ist die Reinigungslotion auf die Entfernung der Beschichtungskomponenten abgestimmt und weist gleichzeitig eine gute Hautverträglichkeit auf. Es können auch unterschiedliche Reinigungslotionen für die erste und die zweite Beschichtungskomponente im Kit vorliegen.

Ein weiterer Aspekt betrifft die Verwendung eines Haftmittelsystems, wie vorhergehend beschrieben, zur Erzeugung eines Hafteffekts zwischen einem Gerät und der Haut eines Benutzers.

Ein weiterer Aspekt betrifft auch die Verwendung einer ersten Beschichtungskomponente in einem Haftmittelsystem, vorzugsweise wie vorhergehend beschrieben, gemeinsam mit einer zweiten Beschichtungskomponente zur Erzeugung eines Hafteffekts zwischen einem Gerät und der Haut eines Benutzers.

Ein weiterer Aspekt betrifft auch die Verwendung einer zweiten Beschichtungskomponente in einem Haftmittelsystem, vorzugsweise wie vorhergehend beschrieben, gemeinsam mit einer ersten Beschichtungskomponente zur Erzeugung eines Hafteffekts zwischen einem Gerät und der Haut eines Benutzers.

### T-PEEL TEST

Der T-Peel Test wird wie folgt durchgeführt:
Die mit den Beschichtungskomponenten beschichteten Teststreifen werden aus einem repräsentativen Muster des Materials (einer mit der Beschichtungskomponente beschichtete 22 µm dicke Polyester-Folie) geschnitten. Die Streifen sind 25 mm breit und haben in Laufrichtung eine Länge von 150 mm. Der Schnitt muss sauber und gerade sein. Pro Beschichtungskomponente werden sechs Testtreifen zur Verfügung gestellt.

Die Testbedingungen sind wie folgt zu wählen: 23°C ± 2°C und 50 % ± 5% relative Feuchtigkeit. Alle Teststreifen müssen vor der Prüfung mindestens 12 Stunden klimatisiert werden.

Beim Prüfverfahren werden dann ca. 100 mm des Teststreifens mit leichtem Fingerdruck auf das Testmaterial geklebt. Im Anschluss werden die Proben mit einer Anrollmaschine, FINAT Standard-Anpressrolle, 2kg, mit einer Geschwindigkeit von l0 mm/Sekunde zweimal in beide Richtungen angerollt. Die verklebten Teststreifen werden 20 Minuten klimatisiert. Der Teststreifen, der mit der zweiten Beschichtungskomponente beschichtet ist, wird in die obere Klemme und der Teststreifen, der mit der ersten Beschichtungskomponente beschichtet ist, in die untere Klemme der Zugprüfmaschine eingespannt, so dass ein Schälwinkel von 180°C entsteht. Der Teststreifen wird nun mit einer Geschwindigkeit von 300mm/min auseinandergezogen.

Sofern nicht widersprüchlich, ist für ergänzende Angaben bezüglich des T-Peel Test die ASTM-Norm D 1876-01 heranzuziehen. Bei widersprüchlichen Angaben, haben die oben genannten Angaben Vorrang.

### BEISPIEL 1: Anwendungsbereich Handball

### HERSTELLUNG UND ZUSAMMENSETZUNG DER BESCHICHTUNGEN

### Gerätebeschichtungskomponente

Die Gerätebeschichtungskomponente wird auf den Handball aufgetragen, um Haftung zwischen Haut und Handball zu erhalten.

### Zusammensetzung:

| Rohstoffe | | Anteil [wt%] |
|---|---|---|
| Zusammensetzung | Beispiel | |
| Polyurethan-Dispersion | Baymedix AD111 von Covestro | 85-95 |
| Wasser, entionisiert | n/a | 5-15 |
| Benetzungsmittel | Surfynol PSA 336 | 0-1 |

Wasser und Benetzungsmittel werden zu der PU-Dispersion hinzugegeben, anschliessend werden die drei Inhaltsstoffe durch Rühren miteinander vermischt.

### Hautbeschichtungskomponenten:

Die Hautbeschichtungskomponente wird auf die Hand aufgetragen, um Haftung zwischen Handball und Hand zu erhalten.

### Hautbeschichtungskomponente 1

### Zusammensetzung:

| Rohstoff | | Anteil [wt%] |
|---|---|---|
| Zusammensetzung | Beispiel | |
| Wässerige Polyvinylpyrrolidon (PVP) - Lösung, 20%, K-Wert: 90 | "Luvitec K90 solution approx. 20%" von BASF | 40-60 |
| Polyurethan-Dispersion (PUD), 50%, pH: 6-9 | Baymedix AD111 von Covestro | 60-40 |

Die PVP-Lösung wird zur PU-Dispersion hinzugegeben, anschliessend werden die beiden Inhaltsstoffe durch Rühren miteinander vermischt.

### Hautbeschichtungskomponente 2

### Zusammensetzung:

| Rohstoff | | Anteil [wt%] |
|---|---|---|
| Zusammensetzung | Beispiel | |
| Acrylat-Dispersion | "Collano DP 7011" von Collano | 5-20 |
| Polyurethan-Dispersion (PUD), 50%, pH: 6-9 | Baymedix AD111 von Covestro | 80-95 |

Die Acrylat-Dispersion wird zur PU-Dispersion hinzugegeben, anschliessend werden die beiden Inhaltsstoffe durch Rühren miteinander vermischt.

### ANWENDUNG DER BESCHICHTUNGEN

### Auftrag Gerätebeschichtungskomponente:

Die Gerätebeschichtungskomponente wird mithilfe einer Pinselrolle auf einen Handball aufgetragen und anschliessend während 30-35 Minuten getrocknet. Die Trocknungszeit der Ballbeschichtungskomponente kann durch Zugabe von Additiven, die Trocknungsart oder die Beschichtungsart beeinflusst werden. Die Schichtdicke der getrockneten Ballbeschichtung, die mit der Pinselrolle erreicht wird, liegt zwischen 30 und 50 µm.

### Auftrag Hautbeschichtungskomponente:

Die Hautbeschichtungskomponente wird mithilfe eines Pinsels auf Fingerspitzen und Handflächen aufgetragen und anschliessend während 3-10 Minuten getrocknet. Die Trocknungszeit der Hautbeschichtungskomponente kann durch Zugabe von Additiven, die Trocknungsart oder die Beschichtungsart beeinflusst werden. Wird die oben beschriebene Beschichtungsmethode angewendet, liegt die Schichtdicke der getrockneten Hautbeschichtung zwischen 11 und 66 µm.

### VERGLEICH DER BESCHICHTUNGSKOMPONENTEN ZU HANDBALLHARZ

Verschiedene Formulierungen wurden auf Klebstoffübertrag, Oberflächenklebrigkeit und Haftung geprüft. Dabei wurde die Zusammensetzung für die Ballbeschichtungskomponente konstant gehalten, während die Zusammensetzung der Hautbeschichtungskomponente variierte. Als Referenz wurde das Handballharz "G-Resin for Handball", Hersteller Molten Europe GmbH, verwendet.

### Zusammensetzung der Formulierungen (Angaben in Gewichtsprozent) :

| | Handballharz (Harz) | Ballbeschichtung (BB) | Hautbeschichtung 1 (H1) | Hautbeschichtung 2 (H2) |
|---|---|---|---|---|
| PUD | | 91.9 | 50 | 80 |
| Wässerige PVP-Lösung | | | 50 | |
| Acrylat-Dispersion | | | | 20 |
| Benetzungsmittel | | 0.8 | | |
| Wasser | | 7.3 | | |
| Handballharz | 100 | | | |

### 1. Ballbeschichtungskomponente (BB) und Hautbeschichtungskomponente 1 (H1)

### Klebstoffübertrag:

Um zu ermitteln, inwiefern ein Klebstoff auf anderen Oberflächen Rückstände hinterlässt, wurde die Prüfungsmethode «Finger Grip-Test» entwickelt. Dabei werden Haut (in diesem Fall die Fingerkuppe des rechten Zeigefingers einer Testperson) und Handballkunstleder mit den zu untersuchenden Beschichtungen beschichtet. Die Fingerkuppe wird vor dem Auftrag mit Isopropanol gereinigt und die Beschichtung während drei bis fünf Minuten bei Raumtemperatur an der Luft getrocknet. Die Ballbeschichtungskomponente wird mittels eines Rakels mit einem Auftragsgewicht von 2.5 g/m2 auf das Handballleder aufgetragen und das beschichtete Substrat während wenigstens 30 Minuten bei 50°C getrocknet.

Unter Krafteinwirkung (20 bis 25 N) werden Fingerkuppe und Ball während 10 Sekunden gegeneinander gedrückt und anschliessend wird der Finger seitwärts vom (beschichteten) Kunstleder abgerollt.

Der Klebstoffübertrag wird qualitativ bewertet.

Der Klebstoffübertrag von H1 und BB wird mittels Finger-Grip Test mit dem Klebstoffübertrag von Harz verglichen.

### Resultate:

| Kriterium | Beide Seiten Harz | Beide Seiten BB | Eine Seite BB eine Seite H1 |
|---|---|---|---|
| Klebrigkeit einzelne Oberfläche | +++ | + | + |
| Haftung zwischen beschichteten Oberflächen | +++ | +++ | +++ |
| Klebstoffübertrag | +++ | +++ | - |
| Reinigungsaufwand | +++ | + | - |

| | | | |
|---|---|---|---|
| Legende: +++ sehr gross, + gering, - nicht vorhanden | | | |

### Haftung:

Die Haftung zwischen H1 und BB wurde mittels T-Peel Test (wie vorhergehend beschrieben) mit der Haftung von Harz verglichen. Dafür wurden die Beschichtungskomponenten BB und H1 mittels Rakel auf eine 22 µm dicke Polyester-Folie (Trägermaterial) aufgetragen und bei 50°C während 30 Minuten getrocknet, die resultierenden Schichtdicken betrugen 29±3 bzw. 20±2 µm. Harz wurde in Toluol gelöst (Mischverhältnis Harz: Toluol 2:1), anschliessend mittels Rakel auf eine 22 µm dicke Polyester-Folie aufgetragen und bei 50°C während 15 Minuten getrocknet. Die resultierende Schichtdicke betrug 20±4 µm. Die höheren T-Peel Werte zwischen H1 und BB lassen sich dadurch erklären, dass die Bruchart unterschiedlich ist; Harz ist in sich weicher und neigt deshalb eher zu einem Kohäsionsbruch.

### Resultate:

| System | Haftung [N/25mm] |
|---|---|
| BB vs. Hl- Beschichtung | 5 - 7 (Adhäsionsbruch zwischen Gerätebeschichtung und Hautbeschichtung. In einzelnen Fällen auch Adhäsionsbruch zum Trägermaterial) |
| Harz vs. Harz-Beschichtung | 2.5 - 3 (Kohäsionsbruch) |

### Oberflächenklebrigkeit:

Die Oberflächenklebrigkeiten von BB und H1 wurde mittels Rolling Ball Test nach Norm ASTM 3121-06 mit derjenigen von Harz verglichen.

Dafür wurden die Beschichtungskomponenten BB und H1 mittels Rakel auf eine 22 µm dicke Polyester-Folie aufgetragen und bei 50°C während 30 Minuten getrocknet, die resultierenden Schichtdicken betrugen 29±3 bzw. 20±2 µm. Harz wurde in Toluol gelöst (Mischverhältnis Harz:Toluol 2:1), anschliessend mittels Rakel auf eine 22 µm dicke Polyester-Folie aufgetragen und bei 50°C während 15 Minuten getrocknet. Die resultierende Schichtdicke betrug 20±4 µm.

Die Resultate in der untenstehenden Tabelle zeigen, dass H1 und BB eine geringere Oberflächenklebrigkeit aufweisen als Harz.

### Resultate:

| System | Rolling Ball [cm] |
|---|---|
| H1 | >40 |
| BB | >40 |
| Harz | 26 - 31 |

### 2. Ballbeschichtungskomponente (BB) und Hautbeschichtungskomponente 2 (H2)

Neben PVP wurden auch weitere Systeme als hauthaftende Komponente der Hautbeschichtungskomponente in Betracht gezogen. Beispielsweise sind Filme aus Acrylat-Dispersionen mit PSA-Eigenschaften bekannt dafür, eine gute Hauthaftung zu besitzen.

Klebstoffübertrag, Oberflächenklebrigkeit und Haftung der Formulierung H2 wurden wie vorhergehend beschrieben bestimmt. Dafür wurden die Beschichtungskomponenten BB und H2 mittels Rakel auf eine 22 µm dicke Polyester-Folie aufgetragen und bei 50°C während 30 Minuten getrocknet, die resultierenden Schichtdicken waren 29±3 bzw. 30±3 µm.

Aufgrund der geringen Acrylat-Konzentration steigt die Oberflächenklebrigkeit von H2 gegenüber derjenigen von H1 nicht signifikant. Auch die Haftung zwischen H2 und BB ist vergleichbar mit derjenigen zwischen H1 und BB (vgl. untenstehende Tabelle).

### Resultate Oberflächenklebrigkeit und Haftung von BB und H2:

| Testmethode / [Einheit] | Wert |
|---|---|
| Rolling Ball Test / [cm] | >40 |
| T-Peel Test / [N/25mm] | 7 - 8.5 (Adhäsionsbruch zwischen Ballbeschichtung und Hautbeschichtung. In einzelnen Fällen auch Adhäsionsbruch zu Trägermaterial) |

Allerdings ist die Acrylat-Konzentration zu gering, um eine genügend hohe Hauthaftung zu generieren; bei Kontakt wird H2 auf BB übertragen. Höhere Acrylat-Konzentrationen würden mit einer erhöhten Oberflächenklebrigkeit einhergehen, was nicht im Sinne der Erfindung wäre.
Vergleich Additive: H1 vs. H2

| Kriterium | Beide Seiten Handballharz | Eine Seite BB Eine Seite Hl | Eine Seite BB Eine Seite H2 |
|---|---|---|---|
| Klebrigkeit einzelne Oberfläche | +++ | + | + |
| Haftung zwischen beschichteten Oberflächen | +++ | +++ | +++ |
| Klebstoffübertrag | +++ | - | + |
| Reinigungsaufwand | +++ | - | + |

| | | | |
|---|---|---|---|
| Legende: +++ sehr gross, + gering, - nicht vorhanden | | | |

### BEISPIEL 2: Anwendungsbereich Stabhochsprung

Die in Beispiel 1 genannte Gerätebeschichtungskomponente (BB) wird mithilfe einer Pinselrolle auf den oberen Teil eines Glasfaserstabes für Stabhochsprung aufgetragen und während 45 Minuten an der Luft getrocknet. Die Schichtdicke liegt zwischen 40 und 70 µm.

Die in Beispiel 1 genannte Hautbeschichtungskomponente (H1) wird mithilfe eines Pinsels auf die Handinnenfläche des Stabhochspringers aufgetragen und während 10 Minuten an der Luft getrocknet. Die Schichtdicke liegt zwischen 11 und 66 µm.

Klebstoffübertrag, Oberflächenklebrigkeit und Haftung der Formulierung wurden im Vergleich zu Baumharz, Griptapes mit und ohne Magnesia, klebenden Griptapes und Sprühkleber qualitativ beurteilt.

Die Formulierung erweist sich insbesondere im Vergleich zu Griptapes und/oder Magnesia als sehr gut haftend. Dennoch ist auch das Wegstossen und Freigeben des Stabes in der abschliessenden Flugphase eines Stabhochsprungs kontrolliert möglich. Im Vergleich zu Baumharz ergeben sich die Vorteile, die mit der verminderten Oberflächenklebrigkeit zusammenhängen. Namentlich vereinfachten die Beschichtungskomponenten die Handhabung und die Verunreinigung durch Staub und andere Störpartikel wird vermindert. Dank der dünnen Auftragungsschicht ist der durch die Wettkampfregeln gebotene gleichmässige Stabdurchmesser eingehalten.

### BEISPIEL 3: Anwendungsbereich E-Sport

Die in Beispiel 1 genannte Gerätebeschichtungskomponente (BB) wird mithilfe eines Pinsels auf die Joystick-Elemente des Controllers einer Spielkonsole aufgetragen und während 25 Minuten an der Luft getrocknet. Die Schichtdicke liegt zwischen 30 und 60 µm.

Die in Beispiel 1 genannte Hautbeschichtungskomponente (H1) wird mithilfe eines Pinsels auf die Fingerkuppen des E-Sportlers aufgetragen und während 10 Minuten an der Luft getrocknet. Die Schichtdicke liegt zwischen 11 und 66 µm.

Die Formulierung hat auch bei dünnerer Auftragungsschicht positive Auswirkungen auf das zeitlich und räumlich präzise Auslösen der Befehle, was letztlich die Leistungsfähigkeit des Spielers erhöht. Auch ermüdet die Hand bei langer Spielzeit weniger schnell. Im Gegensatz zu bekannten "Gamer Gloves" oder rutschfesten Patches, die auf die Fingerkuppen geklebt werden, ist das Haftsystem angenehm zu tragen. Im Vergleich zu "Gamer Grip", welcher ähnlich wie Magnesia die Haut abtrocknet und Schweissbildung verhindert, ist der Hafteffekt überlegen.

## Patentansprüche

1. Haftmittelsystem zur Erhöhung der Haftbarkeit zwischen einem Gerät, insbesondere einem Ball, und der Haut eines Benutzers, umfassend eine erste Beschichtungskomponente zum Auftragen auf zumindest einen Teil des Gerätes und eine zweite Beschichtungskomponente zum Auftragen auf zumindest einen Teil der Haut, insbesondere einer Handflächeninnenseite oder einer Fingerspitze, des Benutzers, wobei die erste Beschichtungskomponente und die zweite Beschichtungskomponente jede für sich eine Oberflächenklebrigkeit > 40 cm gemäss Rolling Ball Test nach Norm ASTM D 3121-06 aufweist, **dadurch gekennzeichnet, dass** bei Kontakt der ersten Beschichtungskomponente mit der zweiten Beschichtungskomponente eine Haftung zwischen 5 und 12 N/25mm, bevorzugt zwischen 6 und 10 N/25mm, besonders bevorzugt zwischen 7 und 9 N/25mm, gemäss T-Peel Test erzielbar ist.

2. Haftmittelsystem gemäss Anspruch 1, wobei die erste Beschichtungskomponente eine Dispersion, vorzugsweise eine Polyurethan-Dispersion umfasst.

3. Haftmittelsystem gemäss Anspruch 1, wobei die zweite Beschichtungskomponente eine Dispersion aus Polyurethan und mindestens einem Additiv umfasst, wobei das Additiv ausgewählt ist aus der Gruppe bestehend aus: Polyvinylpyrrolidon; Copolymere von Polyvinylpyrrolidon; modifiziertes Polyvinylpyrrolidon; Acrylat-Dispersionen; Dispersionen und Lösungen aus zuckerbasierten Rohstoffen, insbesondere Pektinen, Gummi Arabicum, CelluloseDerivate oder Kautschuk; andere Polyurethan-Dispersionen; Silan-Additive; Silikon oder Mischungen davon.

4. Verfahren zur Erzeugung eines Hafteffekts zwischen einem Gerät und der Haut des Benutzers mittels eines Haftmittelsystems, vorzugsweise eines Haftmittelsystems nach einem der Ansprüche 1 bis 3, umfassend die Schritte:
-
i) Bereitstellen einer ersten Beschichtungskomponente,
ii) Auftragen der ersten Beschichtungskomponente auf zumindest einen Teil eines Gerätes, vorzugsweise eines Handballs,
iii) Trocknen der ersten Beschichtungskomponente,
iv) Bereitstellen einer zweiten Beschichtungskomponente,
v) Auftragen der zweiten Beschichtungskomponente auf zumindest einen Teil der Haut des Benutzers, vorzugsweise einer Handflächeninnenseite oder einer Fingerspitze,
vi) Trocknen der zweiten Beschichtungskomponente, wobei beide Beschichtungskomponenten jede für sich eine Oberflächenklebrigkeit > 40 cm gemäss Rolling Ball Test nach Norm ASTM D-3121 06 aufweist,
- In Kontakt bringen des zumindest teilweise beschichteten Gerätes mit der zumindest teilweise beschichteten Haut, **dadurch gekennzeichnet, dass** bei Kontakt der ersten Beschichtungskomponente mit der zweiten Beschichtungskomponente eine Haftung zwischen 5 und 12 N/25 mm, bevorzugt zwischen 6 und 10 N/25 mm und besonders bevorzugt zwischen 7 und 9 N/25 mm, gemäss T-Peel-Test erzielt wird.

5. Verfahren gemäss Anspruch 4, wobei die Schichtdicke der aufgetragenen und getrockneten ersten Beschichtungskomponente und zweiten Beschichtungskomponente jeweils zwischen 5 und 100 µm, vorzugsweise 15 und 50 µm, und ganz besonders bevorzugt 18 und 32 µm, beträgt.

6. Verfahren gemäss einem der Ansprüche 4 oder 5, wobei das Auftragen der ersten Beschichtungskomponente und/oder der zweiten Beschichtungskomponente wiederholt wird.

7. Kit für ein Haftmittel-System, insbesondere für ein Haftmittelsystem gemäss einem der Ansprüche 1 bis 3, zur Erzeugung eines Hafteffekts zwischen einem Gerät und der Haut eines Benutzers, umfassend
- eine erste Beschichtungskomponente zum Auftragen auf das Gerät,
- eine zweite Beschichtungskomponente zum Auftragen auf die Haut,
- Anwendungshinweise zur Verwendung der Beschichtungs-komponenten, insbesondere in einem Verfahren gemäss einem der Ansprüche 4 bis 6,
- optional: eine Applikationshilfe; für die erste Beschichtungskomponente und/oder zweite Beschichtungskomponente.

8. Kit gemäss Anspruch 7, wobei das Kit zusätzlich eine Reinigungslotion umfasst.

9. Verwendung eines Haftmittelsystems nach einem der Ansprüche 1 bis 3, zur Erzeugung eines Hafteffekts zwischen einem Gerät und der Haut eines Benutzers.

10. Verwendung einer ersten Beschichtungskomponente in einem Haftmittelsystem, vorzugsweise nach einem der Ansprüche 1 bis 3, gemeinsam mit einer zweiten Beschichtungskomponente zur Erzeugung eines Hafteffekts zwischen einem Gerät und der Haut eines Benutzers.

11. Verwendung einer zweiten Beschichtungskomponente in einem Haftmittelsystem, vorzugsweise nach einem der Ansprüche 1 bis 3, gemeinsam mit einer ersten Beschichtungskomponente zur Erzeugung eines Hafteffekts zwischen einem Gerät und der Haut eines Benutzers.
